Europäisches Patentamt

European Patent Office

Office européen des brevets

(11) Publication number: **0 365 116 B1**

# EUROPEAN PATENT SPECIFICATION

(45) Date of publication of patent specification: **13.04.94**  (51) Int. Cl.⁵: **G06F 13/12**, G06F 13/16, G06F 13/28

(21) Application number: **89307553.1**

(22) Date of filing: **25.07.89**

(54) **Buffer memory arrangement.**

(30) Priority: **18.10.88 GB 8824373**

(43) Date of publication of application:
**25.04.90 Bulletin 90/17**

(45) Publication of the grant of the patent:
**13.04.94 Bulletin 94/15**

(84) Designated Contracting States:
**DE FR GB**

(56) References cited:
FR-A- 2 528 195
GB-A- 2 089 076

**ELECTRONIC DESIGN. vol. 35, no. 25, 29 October 1987, HASBROUCK HEIGHTS, NJ, US pages 95 - 99; T. Balue: "Data transfer speed extracts mileage from 5.2 Gbyte tape"**

**ELECTRONICS & WIRELESS WORLD, VOL. 94, NO. 1631, SEPTEMBER 1988, SUTTON GB, PAGES 875 - 881; A. CLEMENTS: "MULTI-PROCESSOR SYSTEMS"**

**ELECTRONIC COMPONENTS AND APPLICATIONS. vol. 8, no. 2, 1987, EINDHOVEN NL pages 109 - 112; N. Siddique: "Fast controller converts large static RAM to FIFO buffers"**

**PATENT ABSTRACTS OF JAPAN vol. 11, no. 58 (P-550)(2505) 21 February 1987,& JP-A-61 223964 (CANON INC.)**

(73) Proprietor: **Hewlett-Packard Limited**
**Nine Mile Ride**
**Wokingham, Berkshire RG11 3LL(GB)**

(72) Inventor: **McCarthy, Dominic Paul**
**5 Church Road**
**Stoke Gifford Bristol BS12 6OA(GB)**

(74) Representative: **Coker, David Graeme et al**
**Hewlett-Packard Limited**
**Intellectual Property Section**
**Building 2**
**Filton Road**
**Stoke Gifford Bristol BS12 6OZ (GB)**

**Description**

The present invention relates to a buffer memory arrangement for use in a bi-directional interface interposed, for example, between a data storage device (such as a tape drive) and a data handling system (such as a host computer).

Buffer memory arrangements for bi-directional interfaces are known of the type comprising:
- a buffer memory having a plurality of storage locations, a data port, and an address port,
- a plurality of data channels each for the input and output of data from said buffer memory, and
- memory access control means connected to said memory address port and operative to connect the memory data port to any selected one of said data channels and to control the transfer of data between the selected data channel and selected storage locations in said memory.

The memory access control means is typically what is referred to as a DMA (direct memory access) controller. Such controllers have internal registers which can be programmed by a processor to specify the parameters of a block transfer between the buffer memory and a particular data channel; once the controller has been activated to effect a transfer, the transfer process is controlled by the controller independently of the processor.

Such DMA controllers are highly versatile but depend on the controlling processor to determine the order in which transfers are undertaken. The processor may effect this determination according to some channel priority scheme; however, such schemes are often unsatisfactory in serving the requirements of the lower-priority channels.

Recently, there has been much activity in the area of video memory systems. These systems have highly specific requirements and generally comprise a video memory having one input channel, one output channel and refresh circuitry. An example of such a video memory system is described in European Patent Application No. 0280,882 (RCA) published 7 September 1988. Such memory systems cannot however, be used to interface with data storage devices as these systems are essentially uni-directional in nature.

It is an object of the present invention to provide a buffer memory arrangement that is suitable for servicing a plurality of bi-directional data channels requiring regular access.

According to the present invention as defined in claim 1, there is provided a buffer memory arrangement of the aforesaid type, wherein the memory access control means is arranged to cyclically service said data channels in a predetermined sequence and each for a respective predetermined portion of the service cycle, the buffer memory arrangement being provided with a first-in, first-out data store for each said data channel, and the capacity of each such data store being sufficient to hold the maximum possible accumulation of data arriving via the corresponding said channel during the portions of the service cycle when that channel is not being serviced.

Preferably the division of the service cycle between the channels reflects the data transfer rates required for the channels.

Advantageously, where the buffer memory comprises dynamic RAM chips operable both in a normal access mode applicable to random accesses and in a fast access mode applicable when successive accesses are made to adjacent storage locations of the memory, the memory access control means is operative to cause at least the data channel requiring the highest data transfer rate to be serviced utilising said fast access mode, the duration of corresponding portion of the service cycle being such as to permit multiple memory accesses.

The buffer memory arrangement can, with advantage, be used in an interface between a host computer and a storage device. In this case one data channel serves for the transfer of data between the host computer and buffer memory while another channel serves for the transfer of data between the storage device and buffer memory.

An interface arrangement incorporating a buffer-memory subsystem embodying the invention will now be particularly described, by way of non-limiting example, with reference to the accompanying drawings in which;

Figure 1     is a block diagram of the interface arrangements showing the buffer-memory subsystem;

Figure 2     is a block diagram showing the main components of a DMA controller of the buffer memory sub-system; and

Figure 3     is a diagram illustrating the service cycle operated by the DMA controller of Figure 2.

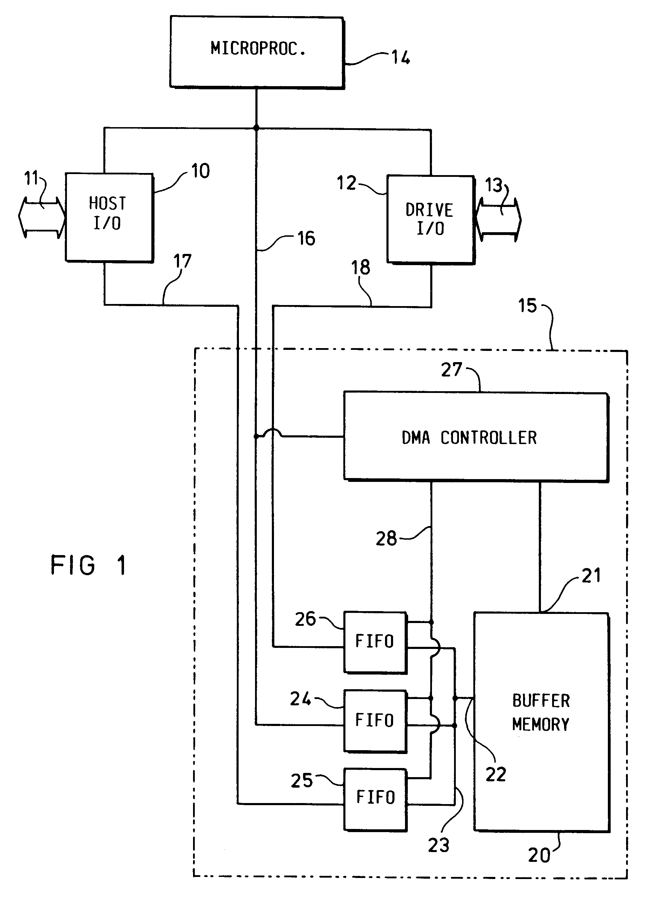

The interface arrangement shown in Figure 1 is intended to interface a data handling system (in the present case, a host computer) with a data storage device (in the present case, a tape drive). The host computer (not shown) is connected to an input/output circuit 10 of the interface arrangement by a bus system 11. The tape drive (not shown) is connected to an input/output circuit 12 of the interface arrangement by a bus system 13. Typically, the interface arrangement will be integrated with the tape drive

2

itself so that the bus system 13 is an internal one; in contrast, the bus system 11 is external and communications over this system will generally take place in accordance with a standard protocol such as the SCSI protocol with the protocol interactions over the bus system 11 being handled by the input/output circuit 10.

In addition to the input/output circuits 10 and 12, the interface arrangement comprises a microprocessor subsystem 14 and a buffer memory subsystem 15. The microprocessor subsystem 14 comprises a microprocessor, ROM memory storing a control program, and a RAM memory. The function of the microprocessor subsystem 14 is to control the overall operation of the interface arrangement, this control being exerted via the microprocessor bus system 16 that extends between the microprocessor subsystem and the input/output circuits 10, 12 and the buffer memory subsystem 15. The input/output circuits 10 and 12 are connected to the buffer memory subsystem 15 by bus systems 17 and 18 respectively.

During data storage, the microprocessor subsystem 14 controls the input of data into the buffer memory subsystem 15 from the host via the bus system 11, the input/output circuit 10 and the bus system 17, and the subsequent transfer of data from the buffer memory to the tape drive via the bus system 18, the input/output circuit 12 and the bus system 13. The buffer memory subsystem 15 permits the differing data rates and formats of the host system and tape drive to be matched to one another. The microprocessor subsystem 14 may also perform a reformatting function between the reading in of data into the buffer memory subsystem 15 and the reading out of data to the tape drive. In implementing this function, the microprocessor subsystem 14 is arranged to read data from the subsystem 15, and write it back to the buffer memory subsystem in a different arrangement possibly with the addition of format control codes.

During data read back, the microprocessor subsystem 14 oversees the reading in of data from the tape drive into the buffer memory subsystem 15 via the bus system 13, the input/output circuit 12 and the bus system 18, and the subsequent reading out of that data from the buffer memory subsystem 15 to the host computer via the bus system 17, the input/output circuit 10 and the bus system 11. In addition, the microprocessor subsystem 14 may effect a reverse formatting of the data held in buffer memory subsystem 15 to that which was implemented during data storage.

In addition to the passage of data through the interface arrangement as described above, the microprocessor subsystem 14 will exchange control signals with the host computer and the tape drive via the corresponding input/output circuit and bus systems. Interface arrangements operating in the above described manner are well known in the art and a more detailed description of the operation of the illustrated arrangement will not therefore be given herein.

The buffer memory subsystem 15 shown in Figure 1 includes a block of buffer memory 20 constituted, for example, by a plurality of dynamic RAM chips (not shown individually). The buffer memory has an address port 21 and a data port 22, the latter being connected to a buffer-memory data bus 23. The data buses of the bus systems 16, 17 and 18 are connected to the buffer-memory data bus 23 via respective FIFOs(first-in, first-out stores) 24, 25 and 26.

The address port 21 of the buffer memory 20 is connected to a DMA (Direct Memory Access) controller 27 of the buffer-memory subsystem 15. The microprocessor bus 16 is connected to the DMA controller 17 to enable the microprocessor subsystem 14 to set up DMA transfers between the buffer memory 20 and the three data channels constituted by the bus systems 16, 17 and 18. The DMA controller 27 is arranged to select a particular data channel by means of control signals output via lines 28 to the FIFOS 24, 25 and 26, the latter being selectively connected to the buffer-memory data bus 23 under the control of these control signals.

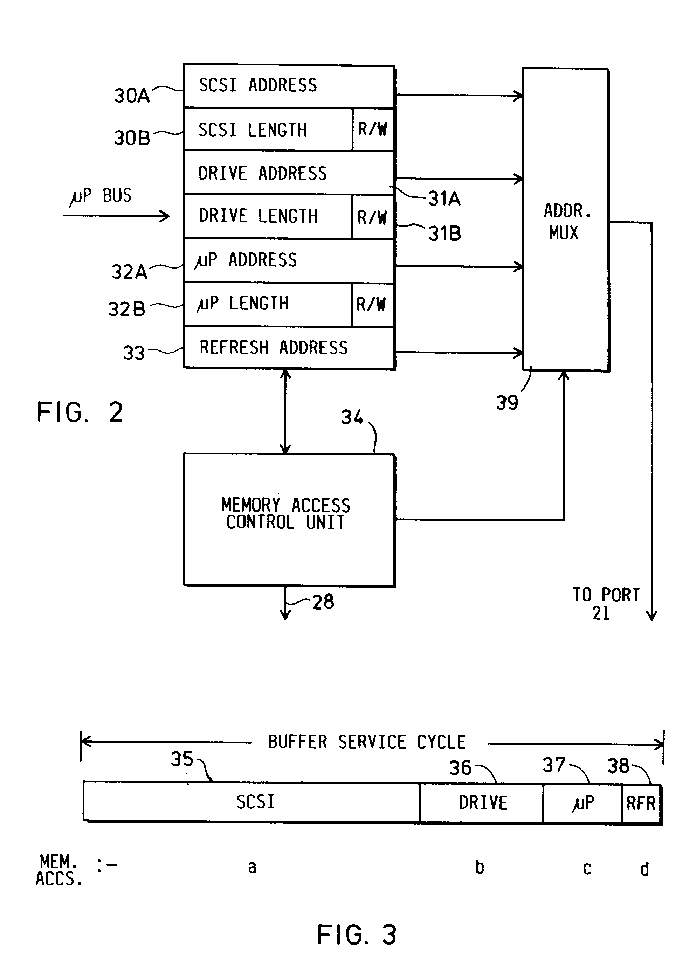

The DMA controller 27 is shown in more detail in Figure 2. In standard manner, the DMA controller includes a plurality of register pairs 30A, 30B; 31A, 31B; and 32A, 32B into which the microprocessor subsystem can write the parameters of required DMA transfers. The registers 30A and 30B contain the start address and block length of a required DMA transfer between the buffer-memory and the SCSI input/output circuit 10; the register 30B also contains a flag to indicate whether the transfer is a read from or a write to the buffer-memory. The registers 31A and 31B contain similar information in respect of transfers between the buffer-memory and the drive input/output circuit 12 while the registers 32A and 32B contain like information for transfers between the buffer memory and the microprocessor subsystem 14. A further register 33 contains the address of the storage locations next to be refreshed (the buffer- memory being constituted in the present example by dynamic RAMS).

The DMA controller 27 is provided with a memory access control unit 34. This control unit 34 operates on a cyclic basis to service the three data channels constituted by the bus systems 16, 17 and 18 and to permit refresh of the DRAMS making up the buffer memory. Figure 3 shows the makeup of a typical buffer-service cycle from which it can be seen that the data channel servicing the SCSI input/output circuit 10 is allocated "a" memory accesses, the data channel servicing the drive input/output circuit 12 is allocated "b" memory accesses, the data channel servicing the microprocessor subsystem 14 allocated "c" memory accesses, and "d" memory accesses are allocated to memory refresh. The division of the buffer service cycle between the data channels and refresh requirement is proportional (although not necessarily directly so) to the required data rates concerned. The values of "a", "b", "c" and "d" are settable by the microprocessor subsystem 14.

During the SCSI data channel phase of this service cycle, the control unit 34 connects the FIFO 25 to the buffer-memory data bus 23 and utilises the information contained in the registers 30A, 30B to produce appropriate addresses on the address port 21 of the buffer memory 20. This latter function is achieved by means of an address multiplexer 39 used to select the register 30A and by the control unit 34 advancing the access address after each memory access is effected. If during the phase 35 of the service cycle either no data transfer is required to/from the SCSI data channel or any required transfer is completed, the memory control unit 34 does not advance to the next service cycle phase but counts out the phase 35.

Upon completion of phase 35 of the service cycle, the control unit 34 disconnects the FIFO 25 from the data bus 23. Thereafter, phase 36 of the service cycle is entered in which the data channel constituted by the bus system 18 is serviced. This phase 36 progresses in a manner similar to that described above with reference to phase 35 except that now the FIFO 26 is connected to the data bus 23 and the information contained in the registers 31A, 31B is used to control the addresses supplied from the address multiplexer 39 to the address port 21 of the buffer-memory 20.

Similarly, during a phase 37 of the service cycle, the FIFO 24 is selectively connected to the data bus 23 and data is transferred between the buffer memory and microprocessor subsystem 14 in dependence on the information contained in the registers 32A, 32B.

During the fourth and final phase 38 of the service cycle, memory refresh circuitry (not shown but incorporated in the buffer memory 20) is enabled to refresh the storage locations (one column per access) of the DRAMS making up the buffer-memory. The storage locations refreshed are determined by the refresh column address contained in the register 33, this address being advanced as each column is refreshed.

The purpose of the FIFOs 24, 25 and 26 is to provide a temporary store for data transferred down the data channels to the buffer-memory during the phases of the service cycle when the corresponding channels are not being serviced. The capacity of each FIFO must therefore be sufficient to hold the maximum possible amount of data that could be received down the corresponding data channel during the phases of the service cycle that that channel is not being serviced. The sizes of the FIFOS will thus be dependent on the channel data rates and the ratios of the values a, b, c and d.

Additionally, the FIFOs 24, 25 and 26 serve to match the data output rate from the buffer memory to the data rate of the channel currently being serviced; generally the channel rate will be lower and the corresponding FIFO serves to smooth out the data bursts received from the memory.

As already noted above, the values of the quantities "a", "b", "c", and "d" are determined by the data rates of the data channels provided by the bus system 17, 18 and 16. Thus, if the data rate of the SCSI channel to the host is of the order of 10M Bytes/sec while that of the channel to the tape drive is only 1 MBytes/sec, then the ratio of "a" to "b" will be roughly 10:1.

However, the relative channel data rates is not necessarily the sole determinant of the optimum ratio of the quantities "a", "b", "c" and "d". Thus where as in the present case, the buffer memory is made up of DRAM chips, another factor that needs to be considered is the possibility of maximising the use of the fast page access mode generally provided by such chips while minimising use of the normal, but slower, random read/write mode.

In the random read/write access mode, both a row address and column address need to be strobed into the memory. This limits the access time to 160ns for the fastest current DRAMs with no concerns for margin. In fast page mode, the row address is strobed first followed by typically 512 column addresses. The first access in fast page mode is effectively a random read/write and takes 160ns, but the successive column accesses are only 80ns long. Because DMA transfers use sequential addresses, this fast page mode is generally applicable. By maximising the use of the fast page access mode, the total bandwidth of the buffer can also be maximised.

Considering the present example in more detail, for a DRAM, let the fast page mode access time be "t"; in general terms, the random read/write access time is twice this value, ie 2t. For the SCSI phase 35, there will be one long access at the beginning and all the rest will be fast accesses. However, in the worst case, a transfer might cross a page boundary. In this case, an extra long cycle is needed to strobe in the new row address. Thus, in the worst case, there will be two long cycles and (a-2) short cycles. Hence, the duration P of the SCSI phase 35 will also be:

$^{P}SCSI = (a-2)t + 2 \times 2t$

Similarly the duration of the drive phase 36 and uP phase 37 will be:

$^{P}D = (b-2)t + 2 \times 2t$
$^{P}up = (c-2)t + 2 \times 2t$

For the refresh phase 38, only a row address is strobed and this is always a long cycle. Thus, for refresh phase:

$^{P}ref = 2dt$

Thus, the worst case buffer cycle time Tworst is given by

$^{T}worst = {}^{P}SCSI + {}^{P}D + {}^{P}up + {}^{P}ref$
$= (a + b + c + 2d + 6)t$

From this, the worst case bandwidth of the buffer can be determined. The number of memory accesses per buffer cycle is $(a + b + c + d)$ so the worst case buffer bandwidth BWbuf is given by

$$BWbuf = \frac{a + b + c + d}{(a+b+c+2d+6)t}$$

Rearranging gives:

$$BWbuf = \frac{1}{(1 + \frac{d+6}{a+b+c+d})t}$$

Which implies that the maximum buffer bandwidth is obtained when $(a + b + c + d)$ tends to $\infty$ and is the reciprocal of the fast access time as expected. Unfortunately, this is not practical not least due to the fact that the refresh phase must ensure memory refresh at least every 8 ms with typical DRAMS.

The bandwidths of the other channels can be determined as well:

$$BWSCSI = \frac{a}{Tworst}$$

$$BW_D = \frac{b}{Tworst}$$

$$BW_{up} = \frac{c}{Tworst}$$

$$BW_{ref} = \frac{d}{Tworst}$$

All of these will generally have restrictions that will allow the ratio a : b : c : d to be chosen. By way of example, consider the following possible restrictions:

. The SCSI channel bandwidth must have a bandwidth of 5MBytes/sec.

. The drive channel bandwidth must have a bandwidth of 712 k Bytes/sec.

. The microprocessor subsystem must have a bandwidth of 200KBytes/sec.

. The refresh bandwidth must satisfy a typical 8 ms for 512 page refreshes ie 1 page/15.7us or 64KBytes/sec.

For t = 100nS (that is allowing about 20nS margin), a suitable ratio of a: b: c: d would be 18:3:2:1 giving the following results:

| Channel BW MB/s | Required BW MB/s | Maximum BW MB/s | Actual BW MB/s |
|---|---|---|---|
| SCSI | 5.00 | 7.50 | 5.30 |
| Drive | 0.80 | 1.25 | 0.88 |
| uP | 0.20 | 0.83 | 0.59 |
| Refresh | 0.07 | 0.42 | 0.29 |

The worst case cycle time came out as 3400 ns which gives a buffer bandwidth of 7.1 MBytes.sec (24 transfers in 3400ns). A refresh cycle time of 1.7ms per 512 row addresses can be expected.

A further design consideration is the capacity of the FIFOs 24, 25,26 needed in view of the chosen values of a,b,d and d. For the SCSI channel, the depth of its FIFO 25 must be greater than 6 to account for the six SCSI transfers that could happen during the 1200 ns of a buffer cycle that the drive, uP and refresh channels have access to the buffer. Similarly, the microprocessor channel FIFO 24 should have a depth of two so that no wait states are incurred, and the drive channel FIFO 26 should have a depth of three for the three drive transfers that could occur in the 2800ns not used by the drive in a buffer cycle.

It will be appreciated that although in the above- described embodiment, there are four phases in the buffer service cycle, a different number of phases could be provided as required by the number of data channels accessing the buffer memory.

**Claims**

1. A buffer memory arrangement for use in a bi-directional interface, the buffer memory arrangement comprising:
   - a buffer memory (20) having a plurality of storage locations, a data port (22) and an address port (21),
   - a plurality of data channels (16,17,18) each for the input and output of data from said buffer memory (20) and
   - memory access control means (27) connected to said memory address port (21) and operative to connect the memory data port (22) to any selected one of said data channels (16,17,18) and to control the transfer of data between the selected data channel and selected storage locations in said memory (20),
   characterised in that the memory access control means (27) is arranged to cyclically service said data channels (16,17,18) in a predetermined sequence and each for a respective predetermined portion (35,36,37) of the service cycle, the buffer memory arrangement being provided with a first-in, first-out data store (24,25,26) for each said data channel, and the capacity of each such data store being sufficient to hold the maximum possible accumulation of data arriving via the corresponding said channel during the portions of the service cycle when that channel is not being serviced.

2. A buffer memory arrangement according to claim 1, wherein the division of the service cycle between the channels reflects the data transfer rates required for the channels.

3. A buffer memory arrangement according to claim 1, wherein the buffer memory (20) comprises dynamic RAM chips operable both in a normal access mode applicable to random accesses and in a fast access mode applicable when successive accesses are made to adjacent storage locations of the memory 20), the memory access control means (27) being operative to cause at least the data channel requiring the highest data transfer rate to be serviced utilising said fast access mode, the duration of corresponding portion of the service cycle being such as to permit multiple memory accesses.

4. A buffer memory arrangement according to claim 1, wherein the buffer memory (20) comprises dynamic RAM chips requiring periodic refreshing, said service cycle including a portion for memory refresh (38) and the overall duration of the service cycle being such as to achieve at least the minimum refresh requirement for the buffer memory (20).

5. An interface for interfacing a data storage device with a host computer, the interface including a buffer memory arrangement according to any one of the preceding claims with one said data channel (17) serving for the transfer of data between the host computer and buffer memory (20), and another of said data channels (18) serving for the transfer of data between the data storage device and buffer memory (20).

6. An interface according to claim 5, further including a microprocessor control sub-system (14), the buffer-memory arrangement having a said data channel (16) serving for the transfer of data between the buffer memory (20) and the microprocessor control sub-system (14).

**Patentansprüche**

1. Eine Pufferspeicheranordnung zur Verwendung in einer bidirektionalen Schnittstelle, wobei die Pufferspeicheranordnung aufweist:
   - einen Pufferspeicher (20) mit einer Mehrzahl von Speicherorten, einem Datentor (22) und einem Adreßtor (21),
   - eine Mehrzahl von Datenkanälen (16, 17, 18), von denen ein jeder für die Eingabe und Ausgabe von Daten in den Pufferspeicher (20) bzw. von diesem dient, und
   - eine Speicherzugriffssteuereinrichtung (27), die mit dem Speicheradreßtor (21) verbunden ist und wirksam ist, um das Speicherdatentor (22) mit irgendeinem ausgewählten Datenkanal (16, 17, 18) zu verbinden und um die Übertragung von Daten zwischen dem ausgewählten Datenkanal und den ausgewählten Speicherorten in dem Speicher (20) zu steuern,
   dadurch gekennzeichnet,
   daß die Speicherzugriffssteuereinrichtung (27) angeordnet ist, um zyklisch die Datenkanäle (16, 17, 18) in einer vorbestimmten Sequenz zu bedienen, wobei ein jeder während eines jeweiligen vorbestimmten Abschnittes (35, 36, 37) des Bedienungszyklus bedient wird, wobei die Pufferspeicheranordnung einen FIFO-Datenspeicher (24, 25, 26) für jeden Datenkanal aufweist und die Kapazität eines jeden derartigen Datenspeichers ausreichend ist, um die maximal mögliche Ansammlung von Daten zu speichern, die über den entsprechenden Kanal während der Abschnitte des Bedienungszyklus eintreffen, während der der Kanal nicht bedient wird.

2. Eine Pufferspeicheranordnung nach Anspruch 1, bei der die Unterteilung des Bedienungszyklus zwischen den Kanälen die Datenübertragungsraten widerspiegelt, die für die Kanäle benötigt werden.

3. Eine Pufferspeicheranordnung nach Anspruch 1, bei der der Pufferspeicher (20) dynamische RAM-Chips umfaßt, welche sowohl in einer normalen Zugriffsbetriebsart, welche auf wahlfreie Zugriffe anwendbar ist, als auch in einer schnellen Zugriffsbetriebsart betreibbar sind, welche anwendbar ist, wenn aufeinanderfolgende Zugriffe auf benachbarte Speicherorte des Speichers (20) ausgeführt werden, wobei die Speicherzugriffssteuereinrichtung (27) wirksam ist, um zu veranlassen, daß wenigstens der Datenkanal, der die höchste Datenübertragungsrate erfordert, unter Verwendung der schnellen Zugriffsbetriebsart bedient wird, wobei die Dauer des entsprechenden Abschnittes des Bedienungszyklus derart ist, daß mehrfache Speicherzugriffe ermöglicht werden.

4. Eine Pufferspeicheranordnung nach Anspruch 1, bei der der Pufferspeicher (20) dynamische RAM-Chips umfaßt, welche ein periodisches Auffrischen erfordern, wobei der Bedienungszyklus einen Abschnitt für die Speicherauffrischung (38) beinhaltet und wobei die gesamte Dauer des Bedienungszyklus derart gewählt ist, daß wenigstens das minimale Auffrischerfordernis für den Pufferspeicher (20) erreicht wird.

5. Eine Schnittstelle für die Schnittstellenverbindung eines Datenspeichergerätes mit einem Host-Computer, wobei die Schnittstelle eine Pufferspeicheranordnung nach einem der vorhergehenden Ansprüche umfaßt, wobei einer der Datenkanäle (17) für die Datenübertragung zwischen dem Host-Computer und dem Pufferspeicher (20) dient und ein anderer der Datenkanäle (18) für die Datenübertragung zwischen dem Datenspeichergerät und dem Pufferspeicher (20) dient.

**6.** Eine Schnittstelle nach Anspruch 5, ferner mit einem Mikroprozessorsteuueruntersystem (14), wobei die Pufferspeicheranordnung den Datenkanal (16) aufweist, der für die Datenübertragung zwischen dem Pufferspeicher (20) und dem Mikroprozessorsteuueruntersystem (14) dient.

**Revendications**

**1.** Un agencement de mémoire tampon à utiliser dans une interface bidirectionnelle, l'agencement de mémoire tampon comprenant:
- une mémoire tampon (20) incluant une série d'emplacements de mémorisation, un port de données (22) et un port d'adresses (21),
- une série de canaux (16, 17, 18) de données servant chacun à l'entrée et à la sortie de données de ladite mémoire tampon (20), et
- un moyen de commande (27) d'accès à la mémoire relié audit port (21) d'adresse de mémoire et servant à relier le port (22) de données de mémoire à un canal choisi quelconque parmi lesdits canaux (16, 17, 18) de données et à commander le transfert de données entre le canal choisi de données et des emplacements choisis de mémorisation dans ladite mémoire (20),
caractérisé en ce que le moyen de commande (27) d'accès à la mémoire est agencé de manière à desservir de façon cyclique lesdits canaux (16, 17, 18) de données selon une fréquence prédéterminée et chacun pendant une partie respective prédéterminée (35, 36, 37) du cycle de service, l'agencement de mémoire tampon comprenant une mémoire premier-entré premier-sorti (24, 25, 26) pour chacun desdits canaux de données, et la capacité de chacune de ces mémoires de données étant suffisante pour tenir l'accumulation maximale possible de données arrivant par l'intermédiaire dudit canal correspondant pendant les parties du cycle de service où ce canal n'est pas desservi.

**2.** Un agencement de mémoire tampon selon la revendication 1, dans lequel la division du cycle de service entre les canaux reflète les vitesses de transfert de données nécessaires pour les canaux.

**3.** Un agencement de mémoire tampon selon la revendication 1, dans lequel la mémoire tampon (20) comprend des microplaquettes de mémoires vives dynamiques servant à la fois dans un mode d'accès normal applicable à des accès aléatoires et dans un mode d'accès rapide applicable lorsque des accès successifs sont effectués à des emplacements voisins de mémorisation de la mémoire (20), le moyen de commande (27) d'accès à la mémoire servant à amener au moins le canal de données qui exige la plus haute vitesse de transfert de données à être desservi en utilisant ledit mode d'accès rapide, la durée de la partie correspondante du cycle de service étant apte à permettre des accès multiples à la mémoire.

**4.** Un agencement de la mémoire tampon selon la revendication 1, dans lequel la mémoire tampon (20) comprend des microplaquettes de mémoires vives dynamiques exigeant un rafraîchissement périodique, ledit cycle de service incluant une partie pour le rafraîchissement (38) de mémoire et la durée d'ensemble du cycle de service étant apte à réaliser moins le besoin minimal de rafraîchissement de la mémoire tampon (20).

**5.** Une interface servant à interfacer un dispositif de mémorisation de données à un ordinateur serveur, l'interface incluant un agencement de la mémoire tampon selon l'une quelconque des revendications précédentes, l'un desdits canaux (17) de données servant au transfert de données entre l'ordinateur serveur et la mémoire tampon (20), et un autre (18) desdits canaux de données servant au transferts de données entre le dispositif de mémorisation de données et la mémoire tampon (20).

**6.** Une interface selon la revendication 5, incluant en outre un sous-système (14) de commande à microprocesseur, l'agencement de tampon de mémoire comprenant l'un desdits canaux (16) de données servant au transfert de données entre la mémoire tampon (20) et le sous-système (14) de commande à microprocesseur.

FIG 1

FIG. 2

FIG. 3